(19) Europäisches Patentamt
European Patent Office
Office européen des brevets

(11) **EP 3 040 107 B1**

(12) **FASCICULE DE BREVET EUROPEEN**

(45) Date de publication et mention
de la délivrance du brevet:
**20.12.2017 Bulletin 2017/51**

(51) Int Cl.:
***A63F 13/22*** *(2014.01)*   ***G06F 3/0338*** *(2013.01)*
***G06F 3/038*** *(2013.01)*

(21) Numéro de dépôt: **16150004.6**

(22) Date de dépôt: **03.01.2016**

(54) **PROCEDE DE CONTROLE D'UN CURSEUR DE VISEE AU MOYEN D'UNE MANETTE DE JEU ET MANETTE DE JEU CORRESPONDANTE**

VERFAHREN ZUR STEUERUNG EINES ZIELCURSORS MITHILFE EINES JOYSTICKS, UND ENTSPRECHENDER JOYSTICK

METHOD FOR CONTROLLING A SIGHT EXTENSION USING A JOYSTICK AND CORRESPONDING JOYSTICK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.01.2015 FR 1550006**

(43) Date de publication de la demande:
**06.07.2016 Bulletin 2016/27**

(73) Titulaire: **Bigben Interactive SA**
**59814 Lesquin Cedex (FR)**

(72) Inventeurs:
• **CHATRIER, Norman**
**92300 Levallois-Perret (FR)**
• **FALC, Alain**
**8500 Kortrijk (BE)**
• **ALLAERT, Yannick**
**62410 Meurchin (FR)**

(74) Mandataire: **Vigand, Philippe et al**
**Novagraaf International SA**
**Chemin de l'Echo 3**
**1213 Onex - Genève (CH)**

(56) Documents cités:
JP-A- H08 281 584   US-A1- 2005 195 166
US-A1- 2009 286 599   US-B1- 6 203 432

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne de manière générale un procédé de contrôle d'un dispositif d'actionnement de jeu muni d'au moins un élément de commande de direction, comme par exemple une manette de jeu munie d'un ou plusieurs sticks directionnels ou encore un joystick ou une manette de type manche à balai. L'invention concerne plus particulièrement le procédé de contrôle d'un curseur de visée au moyen de l'élément de commande de direction dans le but d'adapter ce type de dispositif d'actionnement de jeu, ordinairement destiné à une utilisation pour console de jeux vidéos, à une utilisation pour jeux sur ordinateur. L'invention concerne également le dispositif d'actionnement de jeu résultant.

Dans la suite de la présente description,on utilisera les expressions « position de repos » et « zone morte » en lien avec l'élément de commande de direction, à savoir notamment un levier de joystick ou un stick de manette de jeu. On entend par « position de repos », la position prise par l'élément de commande de direction lorsqu'il n'est pas actionné par l'utilisateur. On entend par zone morte, une zone définie autour de la position de repos, dans laquelle les déplacements de l'élément de commande de direction ne seront pas pris en considération.

L'utilisation d'une zone morte est un traitement commun à de nombreux logiciels permettant de viser avec un joystick. Cette option consiste à appliquer une zone morte autour de la position de repos du joystick. Cela présente un inconvénient dans la mesure où il devient difficile, voire impossible, d'effectuer de petits mouvements autour de la position de repos. En effet les petits mouvements du curseur de visée correspondent à une position du joystick proche de la frontière de la zone morte et un changement de direction nécessite de balayer un arc de cercle d'autant plus grand que la zone morte est grande, voire de la traverser ce qui peut induire une latence, et rend au final la gestion des petits mouvements du curseur de visée très compliquée. De plus l'ajout d'une zone morte a pour effet de réduire l'amplitude exploitable du joystick, il est donc important de pouvoir réduire la taille de cette zone.

Des procédés de réglage d'un joystick sont connus dans l'art antérieur, en particulier du document JP 2010-137079. Ce document décrit un procédé de réglage de la zone morte du joystick. Les informations de localisation basée sur l'actionnement du levier d'un joystick sont fournies à un circuit de commande pour ensuite entraîner un moteur sur la base des informations de localisation. Le circuit de commande détecte une position de point mort ou position de repos et définit une zone morte dans une plage définie autour de cette position de repos à chaque fois que le levier retourne automatiquement dans sa position de repos. De cette manière, la zone morte peut être réglée autour de la position de repos quelque soit la variation de cette position. Un tel procédé de réglage n'est toutefois pas adapté à une utilisation du joystick comme dispositif d'actionnement d'un jeu et ne présente donc pas les mêmes contraintes, comme par exemple une utilisation soutenue et saccadée du levier sur lequel peuvent être exercées des forces d'actionnement importantes par l'utilisateur, ni les mêmes exigences, comme par exemple le besoin de cumuler rapidité et précision pour des jeux avec visée.

Un autre procédé de réglage d'un joystick est connu dans l'art antérieur, en particulier du document JPH08-281584. Ce document décrit un procédé de gestion de la zone morte du joystick. En fonction de la position du joystick, une tension de sortie est fournie. La zone morte est négligée lorsque la quantité du changement de tension entre deux mesures est supérieure à un seuil déterminé. Un tel procédé de gestion n'est toutefois pas adapté à une utilisation du joystick comme dispositif d'actionnement d'un jeu et ne présente donc pas les mêmes contraintes, comme par exemple le besoin de cumuler rapidité et précision pour des jeux avec visée.

De manière générale, l'adaptation d'une manette de jeu ou d'un joystick pour une utilisation sur ordinateur présente un certain nombre de difficultés dont quelques-unes sont listées ci-dessous. Par souci de simplicité, nous utiliserons uniquement la dénomination liée à un joystick, mais bien entendu cela reste également valable pour un stick de manette de jeu.

Tout d'abord, une première difficulté est liée au déplacement du levier d'un joystick basé sur sa position absolue. Le signal obtenu à partir d'un joystick fournit une information sur la position du levier mais ne donne aucune information sur son mouvement. Il en résulte un important manque de réactivité lors de son utilisation en tant que périphérique de pointage. Ceci est notamment le cas pour les jeux de tir impliquant une visée au moyen du joystick. La visée peut être résumée au problème suivant: étant donné un curseur contrôlé par l'utilisateur et une cible (éventuellement mobile), il s'agit de déplacer le curseur sur la cible le plus rapidement et précisément possible. Ce problème est traité de façon radicalement différente par l'utilisateur selon que le périphérique utilisé soit une souris ou un joystick. Dans le cas d'une souris le mouvement du curseur reproduit le mouvement de la souris, l'utilisateur n'a qu'à déplacer cette dernière en conséquence. Dans le cas d'un joystick l'utilisateur doit orienter le levier dans la direction correspondant à la cible, la vitesse de déplacement dépend alors de l'inclinaison du levier. Or l'inclinaison est limitée par l'amplitude de ce dernier, ce processus rend la visée moins naturelle et moins réactive.

Une autre difficulté concerne le recentrage du joystick par rapport à sa position centrale correspondant à l'absence de mouvement du curseur. Pour cela il est nécessaire que le levier se recentre systématiquement lorsqu'il n'est pas manipulé dans sa position de repos. Or le mécanisme employé (généralement un ressort) ne permet pas un recentrage parfait, de sorte que la position de repos ne correspond pas à la position centrale. Ce recentrage est même souvent très approximatif (parfois plus de 15 % de l'amplitude totale). Ceci provoque un mouvement permanent du curseur et contraint l'utilisateur à devoir lui même recentrer le joystick ce qui complique encore la visée, en particulier lorsqu'il faut stabiliser le curseur sur une cible donnée.

Une autre difficulté concerne le manque d'amplitude du joystick. L'utilisation d'une souris n'impose pas de contrainte liée à l'amplitude du mouvement. L'utilisateur dispose théoriquement d'autant d'espace que nécessaire afin de décomposer le mouvement et d'augmenter la précision du geste. L'amplitude d'un joystick est quant à elle limitée, en conséquence pour une visée précise nécessitant une sensibilité basse, la vitesse maximale de déplacement du curseur devrait être faible de sorte que la visée perd alors en réactivité. Il est alors par exemple impossible dans ces conditions d'atteindre une cible se déplaçant rapidement ou d'atteindre rapidement une cible immobile. Réciproquement une visée réactive nécessite une sensibilité élevée et entraine une perte de précision.

Un but de la présente invention est de répondre aux inconvénients de l'art antérieur mentionnés ci-dessus et en particulier, tout d'abord, de proposer un procédé de contrôle d'un curseur de visée sur un écran au moyen d'un dispositif d'actionnement de jeu équipé d'un élément de commande direction permettant d'exploiter au mieux les performances du dispositif d'actionnement de jeu et de fournir à son utilisateur une qualité et une expérience de jeu comparable à celle obtenue avec un clavier et une souris et plus particulièrement d'optimiser la gestion de la visée.

Pour cela un premier aspect de l'invention concerne un procédé de contrôle d'un curseur de visée au moyen d'un dispositif d'actionnement de jeu équipé d'au moins un élément de commande de direction agencé pour occuper une position de repos et se déplacer au moins selon un axe, et présentant une zone morte définie par un déplacement prédéterminé de l'élément de commande de direction le long de l'axe de part et d'autre de la position de repos, comprenant les étapes consistant à :

- détecter une position de l'élément de commande de direction le long dudit au moins un axe,

- déterminer la vitesse de déplacement de l'élément de commande de direction basée sur un historique des positions détectées,

- comparer la vitesse de déplacement de l'élément de commande de direction avec un seuil de vitesse prédéterminé,

- lorsque la vitesse de déplacement de l'élément de commande est inférieure au seuil de vitesse prédéterminé, transmettre des données de position correspondant à la position détectée hors de la zone morte et transmettre une valeur prédéfinie dans la zone morte, et

- lorsque la vitesse de déplacement de l'élément de commande est supérieure au seuil de vitesse prédéterminé, transmettre des données de position correspondant à la position détectée, y compris dans la zone morte et comprenant en outre l'étape consistant à :

- transmettre des données de position correspondant à une position détectée dans la zone morte, pondérées par un coefficient de sensibilité prédéterminé, lorsque la vitesse de déplacement de l'élément de commande décroit et devient inférieure au seuil de vitesse prédéterminé.

Un tel procédé de contrôle permet de tenir compte et d'exploiter les mouvements de l'élément de commande de direction et de compenser en partie les défauts liés à l'utilisation de la zone morte usuelle. En effet, un tel procédé permet de définir une zone morte dynamique en fonction de la vitesse de déplacement de l'élément de commande de direction. Ainsi, la zone morte est active tant que la vitesse de l'élément de commande de direction ne dépasse pas le seuil de vitesse prédéterminé, c'est-à-dire que lorsque l'élément de commande est immobile ou quasi immobile dans la zone morte, le curseur ne bouge pas même si l'élément de commande n'est pas parfaitement recentré sur la position de repos. Lorsque la vitesse de l'élément de commande dépasse le seuil de vitesse prédéterminé, la zone morte est désactivée de sorte que les mouvements de l'élément dans la zone morte sont pris en considération. Cela est particulièrement avantageux pour la prise en compte de petits mouvements rapides situés dans la zone morte qui est alors inactive. Il en résulte une réactivité et une précision améliorée en particulier pour une opération de visée grâce à l'utilisation d'une telle zone morte dynamique. En outre, un tel contrôle permet d'assurer, quand la vitesse du stick diminue et passe en dessous du seuil de vitesse, que la zone morte se réactive progressivement de sorte que si l'élément de commande de direction est présent dans la zone morte, la sensibilité est diminuée jusqu'à revenir à une activation complète de la zone morte.

Avantageusement, l'élément de commande de direction est agencé pour se déplacer selon au moins deux axes formant un plan, la zone morte étant définie par un déplacement prédéterminé dans le plan autour de la zone de repos. La définition de la zone morte par rapport au plan défini par les deux axes de déplacement permet de capturer tous les mouvements susceptibles d'être réalisés par l'utilisateur lors de l'actionnement de l'élément de commande de direction.

Plus avantageusement encore, lorsque l'élément de commande de direction reste dans la zone morte, le coefficient de sensibilité décroit jusqu'à devenir nul suivant une fonction d'amortissement prédéterminée réglable. Selon une variante avantageuse, la fonction d'amortissement est définie de la manière suivante :

- durant un premier temps de latence réglable, le coefficient de sensibilité est constant ;

- durant un deuxième temps de latence réglable, le coefficient de sensibilité décroit jusqu'à atteindre zéro à la fin du deuxième temps de latence.

Cette réactivation progressive de la zone morte permet une transition fluide entre l'état inactif et l'état actif de la zone morte. Ainsi, un mouvement dont la vitesse passe momentanément en dessous du seuil de vitesse prédéterminée et se situant dans la zone morte dynamique n'est pas brutalement interrompu. L'utilisation d'une fonction d'amortissement avec deux temps de latence permet d'optimiser encore un peu plus la réactivité du dispositif d'actionnement de jeu. La possibilité de réglage par l'utilisateur de ces deux temps de latence permet de s'adapter d'une part aux habitudes de jeu de ce dernier et d'autre part aux différents exigences de jeu suivant le jeu considéré.

Avantageusement, il est prévu en outre une étape consistant à lisser la nouvelle position détectée du joystick par rapport à un historique des positions précédentes, lors d'un déplacement depuis une position située dans la zone morte vers une position située hors de la zone morte afin de gommer un saut de position lié à la sortie de la zone morte. De cette manière, il est toujours possible d'effectuer des mouvements quelque soit la vitesse et notamment pour de petites vitesses.

Avantageusement, il est prévu en outre les étapes consistant à détecter la position de repos de l'élément de commande de direction le long dudit au moins un axe et à définir la zone morte autour de la position de repos détectée de sorte que la position de repos soit située au centre de la zone morte. L'objectif est de symétriser le défaut de recentrage de l'élément de commande de direction et par conséquent de pouvoir utiliser une zone morte moins grande.

Avantageusement, l'élément de commande de direction présente une vitesse maximale d'origine pour se déplacer le long dudit au moins un axe, le procédé comprenant en outre les étapes consistant à calculer automatiquement la vitesse maximale selon chaque direction le long dudit au moins un axe ; et à effectuer une mise à l'échelle selon chaque direction le long de l'axe en faisant varier le coefficient de sensibilité afin de restaurer la vitesse maximale d'origine et d'obtenir une visée symétrique.

Avantageusement, l'élément de commande de direction présente, lors d'un déplacement en butée le long dudit au moins un axe, une inclinaison maximale par rapport à la position de repos, le procédé comprenant en outre une étape consistant à régler un pourcentage de l'inclinaison maximale pour définir la zone morte autour de la position de repos. Alternativement, le procédé peut comprendre une étape consistant à entrer une valeur de rayon permettant de définir un disque par projection sur le plan du mouvement sphérique de l'élément de commande de direction et utiliser le disque par projection ainsi défini pour déterminer la zone morte. Ces étapes additionnelles permettent d'optimiser la définition de la zone morte tout en évitant les mouvements indésirables du curseur à l'écran.

Avantageusement, l'élément de commande de direction est agencé pour se déplacer selon chaque axe entre deux positions en butée autour de la position de repos, le procédé comprenant en outre les étapes consistant à:

- définir une position intermédiaire de l'élément de commande de direction entre la position de repos et chacune des positions en butée de sorte à définir une zone intermédiaire autour de la position de repos ;

- calculer au moins une dérivé d'ordre au moins un par rapport au temps de la position de l'élément de commande de direction en fonction d'un historique des positions détectées ;

- déterminer si la position détectée est située dans la zone intermédiaire ;

- lorsque la position détectée est située dans la zone intermédiaire, déterminer la vitesse de déplacement du curseur de visée en fonction de la position détectée ;

- lorsque la position détectée est située en dehors de la zone intermédiaire, déterminer la vitesse de déplacement du curseur de visée en fonction de la position détectée et de la dérivée calculée.

Un deuxième aspect de l'invention concerne un dispositif d'actionnement de jeu comprenant :

- au moins un élément de commande de direction agencé pour occuper une position de repos et se déplacer au moins selon un axe et présentant une zone morte définie par un déplacement prédéterminé le long de l'axe de part et d'autre de la position de repos ;

- un capteur de position agencé pour détecter une position de l'élément de commande de direction le long dudit au moins un axe ;

- des moyens de traitement pour déterminer la vitesse de déplacement de l'élément de commande de direction basée sur les positions successives détectées et pour comparer la vitesse de déplacement de l'élément de commande de direction avec un seuil de vitesse prédéterminé ;

- des moyens de communication pour transmettre :

  - lorsque la vitesse de déplacement de l'élément de commande est inférieure au seuil de vitesse prédéterminé, des données de position correspondant à la position détectée hors de la zone morte et une valeur prédéfinie dans la zone morte, et

  - lorsque la vitesse de déplacement de l'élément de commande est supérieure au seuil de vitesse prédéterminé, les données de position correspondant à la position détectée, y compris dans la zone morte

caractérisé en ce que les moyens de communication sont en outre agencés pour transmettre des données de position correspondant à une position détectée dans la zone morte, pondérées par un coefficient de sensibilité prédéterminé, lorsque la vitesse de déplacement de l'élément de commande décroit et devient inférieure au seuil de vitesse prédéterminé.

Un dispositif de jeu selon le deuxième aspect de l'invention présente une réactivité et une précision plus grande en particulier pour les jeux vidéos sur ordinateur impliquant une visée.

L'invention concerne également d'autres aspects qui en combinaison avec l'un et/ou l'autre des deux premiers aspects permettent encore d'améliorer la réactivité et la précision du dispositif d'actionnement de jeu.

Un premier traitement supplémentaire consiste à renseigner, par exemple par le biais d'une saisie effectuée par l'utilisateur, l'angle maximal d'inclinaison de l'élément de commande de direction et à calculer la position réelle de l'élément de commande de direction. En effet les données fournies par l'élément de commande mesurent en général l'inclinaison de ce dernier sur deux axes, l'axe horizontal et l'axe vertical. La position réelle de l'élément de commande de direction peut être alors calculée en tenant compte de l'inclinaison maximale préalablement renseignée. La position réelle est calculée Selon une première option, la position calculée dite normée est définie comme l'angle d'inclinaison de l'élément à un facteur près indépendamment de la direction suivie par l'élément de commande. Selon une seconde option, la position réelle de l'élément est calculée en tenant compte de la position normée et de la direction d'inclinaison de sorte que la position de l'élément de commande est interprétée comme un point mobile se déplaçant sur une sphère, la position normée correspondant à la longueur de l'arc de cercle joignant l'élément de commande au point central, normalement le point de repos. Selon une troisième option, si le calcul de la position normée n'est pas effectué, la position de l'élément est calculée comme étant le projeté de sa position sur le plan équatorial de la sphère dont le pôle nord correspond à la position centrale de l'élément. Concrètement la direction reste la même que dans la deuxième option mais la norme de la position est le sinus de la norme précédente.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

- la figure 1 représente un procédé de contrôle dynamique de la zone morte d'un joystick ;

- la figure 2 représente un procédé de contrôle dynamique de la zone morte d'un joystick selon un mode de mise en oeuvre de l'invention ;

- la figure 3 représente une variante du procédé selon le mode de mise en oeuvre de la figure 2 ;

- la figure 4 représente une variante des procédés de contrôle dynamique de la zone morte incluant un contrôle statique de la zone morte ;

- la figure 5 représente schématiquement un joystick selon un mode de réalisation de l'invention.

Dans la suite de la présente description, par souci de simplification, il est fait référence uniquement à un joystick pour indiquer indistinctement le dispositif d'actionnement de jeu, i.e. le joystick lui-même, et l'élément de commande de direction, i.e. le levier de commande du joystick. Dans les modes de réalisations présentés ci-après, le joystick se déplace suivant deux axes X et Y formant un plan, bien que cela soit également possible pour des déplacements suivant un seul axe ou trois axes. On comprendra encore que cela s'applique de la même manière à tout dispositif de jeu muni d'un élément de commande direction comme par exemple une manette de jeu équipée d'un stick.

Il est également fait mention de l'interaction avec un système d'imagerie et de sons tel qu'un écran relié à une unité de traitement numérique comme par exemple un ordinateur personnel, et en particulier dans le cadre d'un jeu vidéo présentant un curseur sur l'écran pour assurer une visée. Les différentes données, en particulier de position et de vitesse, ainsi que les paramètres prédéfinis par l'utilisateur sont stockées dans des mémoires volatile ou non volatile suivant les besoins. L'utilisation de tels moyens de stockage n'est pas explicitement mentionnée par la suite. La transmission des données fait référence de manière générale à la communication des données pertinentes par le joystick à l'unité de traitement numérique pour l'avancement du jeu.

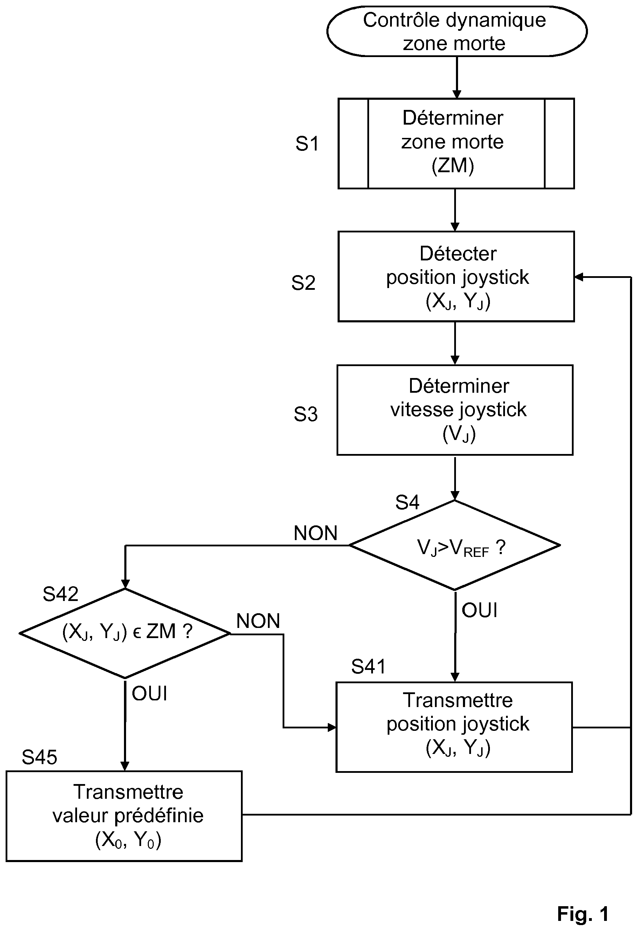

La figure 1 représente un procédé de contrôle dynamique de la zone morte d'un joystick. On entend par contrôle dynamique un réglage qui se base sur la position et sur le mouvement du joystick.

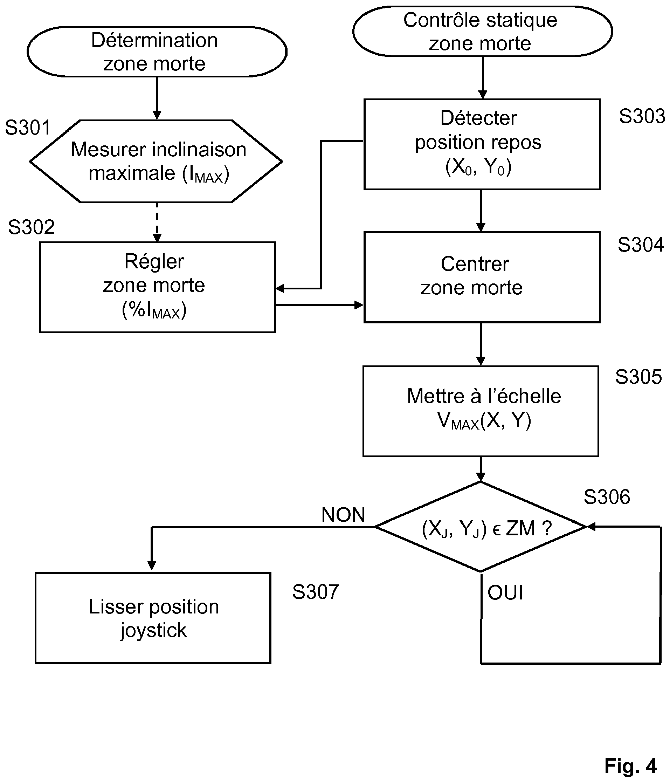

Une étape préliminaire S1 de détermination de la zone morte (ZM) consiste à définir la zone dans laquelle les petits mouvements du joystick ne sont, en général, pas pris en compte par le jeu vidéo pour éviter des déplacements intempestifs du curseur de visée sur l'écran. Un exemple de méthode de détermination de la zone morte sera donné plus en détail à la figure 4. Cette étape préliminaire S1 peut être réalisée une fois avant même de débuter le procédé de contrôle dynamique de la zone morte ou au contraire être réalisée au début de procédé comme cela est représenté à la figure 1.

Une étape S2 consiste à détecter la position $(X_J, Y_J)$ du joystick suivant les deux axes de déplacement par rapport à la position de repos considérée initialement comme la position centrale $(X_0, Y_0)$. La détection de la position du joystick est réalisée périodiquement et de préférence à haute fréquence de sorte à être capable de détecter tous les mouvements réalisés par l'utilisateur. La fréquence d'échantillonnage utilisée est choisie de préférence entre 125 et 500 Hz. Une fréquence élevée, comme par exemple 500 Hz, sera particulièrement avantageuse en ce qu'elle permet de réaliser des calculs sur un historique de positions détectées plus important avant que les données ne soient transmises à un système d'imagerie et de sons.

Une étape S3 consiste à déterminer la vitesse $V_J$ de déplacement du joystick sur la base des positions détectées successivement à l'étape S2. La détermination de la vitesse est également réalisée périodiquement, et de préférence à la même fréquence que celle utilisée pour la détection de position, de sorte à tenir compte des changements de vitesse en temps réel.

Une étape S4 consiste à comparer la vitesse déterminée à l'étape S3 avec un seuil de vitesse $V_{REF}$ prédéterminé afin de déterminer comment doivent être gérées les données de position détectées dans la zone morte. Si la vitesse $V_J$ de déplacement du joystick est supérieure au seuil de vitesse $V_{REF}$ prédéterminé, le procédé de contrôle passe à l'étape S41. Si par contre la vitesse $V_J$ de déplacement du joystick est inférieure au seuil de vitesse $V_{REF}$ prédéterminé, le procédé de contrôle passe à l'étape S42.

A l'étape S41, c'est-à-dire lorsque la vitesse $V_J$ de déplacement du joystick est supérieure au seuil de vitesse $V_{REF}$ prédéterminé, le joystick transmet la position $(X_J, Y_J)$ du joystick à l'étape S2, quelque soit cette position, c'est-à-dire y compris si elle est située dans la zone morte. Le procédé retourne à l'étape S2 pour la prochaine mesure de position du joystick.

L'étape S42, c'est-à-dire lorsque la vitesse $V_J$ de déplacement du joystick est inférieure au seuil de vitesse $V_{REF}$ prédéterminé, consiste à déterminer si la position $(X_J, Y_J)$ détectée est située dans la zone morte ou non. Si la position détectée se situe dans la zone morte, le procédé passe à l'étape S45, sinon il passe à l'étape S41.

L'étape S45, c'est-à-dire lorsque la position détectée à l'étape S2 se situe dans la zone morte, consiste à transmettre une valeur prédéfinie à la place de la position effectivement détectée. Cette valeur est choisie de préférence comme étant la position de repos $(X_0, Y_0)$ du joystick dans la mesure où il n'est pas souhaitable de retranscrire de légers déplacements du joystick, i.e. à faible vitesse, dans la zone morte, c'est-à-dire autour de la position de repos. Ensuite, le procédé retourne à l'étape S2 pour une nouvelle mesure de la position du joystick.

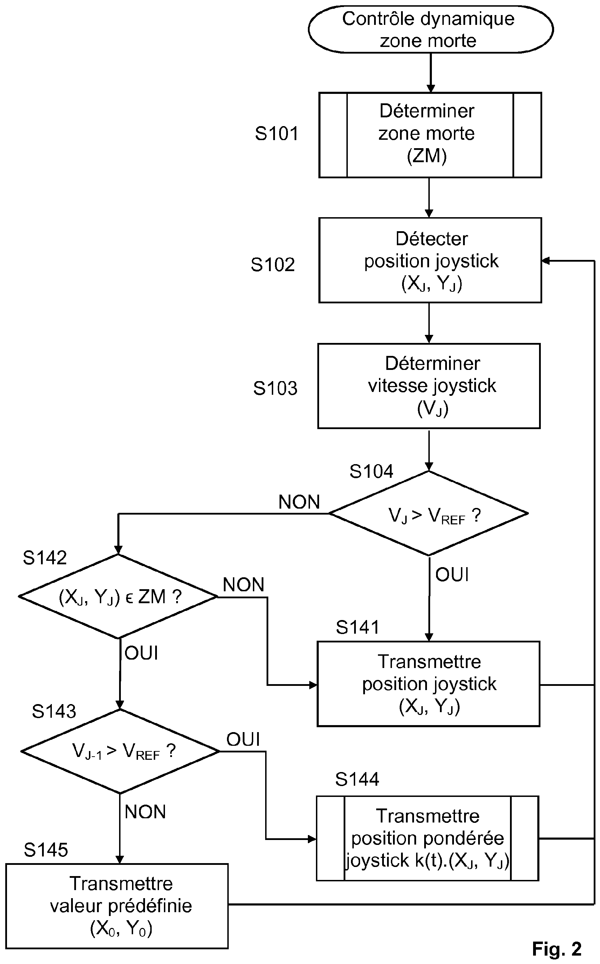

La figure 2 représente un procédé de contrôle dynamique de la zone morte d'un joystick selon un mode de mise en oeuvre de l'invention. Dans ce mode de mise en oeuvre, un certain nombre d'étapes sont identiques à celles présentées ci-dessus en relation avec la figure 1 et ne sont pas détaillées à nouveau. La valeur seuil de vitesse $V_{REF}$ est réglable par l'utilisateur ou prédéfini. Les étapes S101 à 104 et S141 correspondent aux étapes S1 à S4 et S41.

L'étape S142 diffère légèrement de l'étape S42 en ce qu'elle renvoie à l'étape S143 et non pas directement à l'étape S145. L'étape S142, c'est-à-dire lorsque la vitesse $V_J$ de déplacement du joystick est inférieure au seuil de vitesse $V_{REF}$ prédéterminé, consiste à déterminer si la position $(X_J, Y_J)$ détectée est située dans la zone morte ou non. Si la position détectée se situe dans la zone morte, le procédé passe à l'étape S143, sinon il passe à l'étape S141.

L'étape S143 consiste à comparer la vitesse précédemment déterminée $V_{J-1}$, c'est-à-dire la vitesse déterminée lors de l'avant dernière étape S103, avec le seuil de vitesse $V_{REF}$ prédéterminé afin de déterminer si la vitesse de déplacement actuelle $V_J$ fait suite à une vitesse de déplacement précédente $V_{J-1}$ supérieure ou inférieure au seuil de vitesse prédéterminé. Si la vitesse précédente $V_{J-1}$ de déplacement du joystick est supérieure au seuil de vitesse $V_{REF}$ prédéterminé, le procédé de contrôle passe à l'étape S144. Si par contre la vitesse précédente $V_{J-1}$ de déplacement du joystick est inférieure au seuil de vitesse $V_{REF}$ prédéterminé, le procédé de contrôle passe à l'étape S145.

L'étape S144, c'est-à-dire lorsque la vitesse précédente $V_{J-1}$ de déplacement du joystick est supérieure au seuil de vitesse $V_{REF}$ prédéterminé, consiste à transmettre la position du joystick pondérée par un coefficient de sensibilité k(t), qui est de préférence variable. L'objectif de ce coefficient de sensibilité est notamment d'éviter un saut brusque du curseur de visée lors d'un ralentissement du mouvement du joystick dans la zone morte. Ensuite, le procédé retourne à l'étape S102 pour une nouvelle mesure de la position du joystick. Le coefficient de sensibilité ou fonction d'amortissement est par exemple défini par une fonction polynomiale de degré 3 du type :

$$k(t) = a.t^3 + b.t^2 + c.t + d \qquad\qquad (1)$$

dans laquelle t représente le temps écoulé, a, b, c et d représentent des coefficients définis en fonction d'au moins un paramètre renseigné par l'utilisateur ou prédéfini (par ex. un temps de latence).

L'étape S145, c'est-à-dire lorsque la vitesse précédente $V_{J-1}$ de déplacement du joystick est inférieure au seuil de vitesse $V_{REF}$ prédéterminé, consiste à transmettre une valeur prédéfinie à la place de la position effectivement détectée. Cette valeur est choisie de préférence comme étant la position de repos $(X_0, Y_0)$ du joystick dans la mesure où il n'est pas souhaitable de retranscrire de légers déplacements du joystick, i.e. à faible vitesse, dans la zone morte, c'est-à-dire autour de la position de repos. Ensuite, le procédé retourne à l'étape S102 pour une nouvelle mesure de la position du joystick.

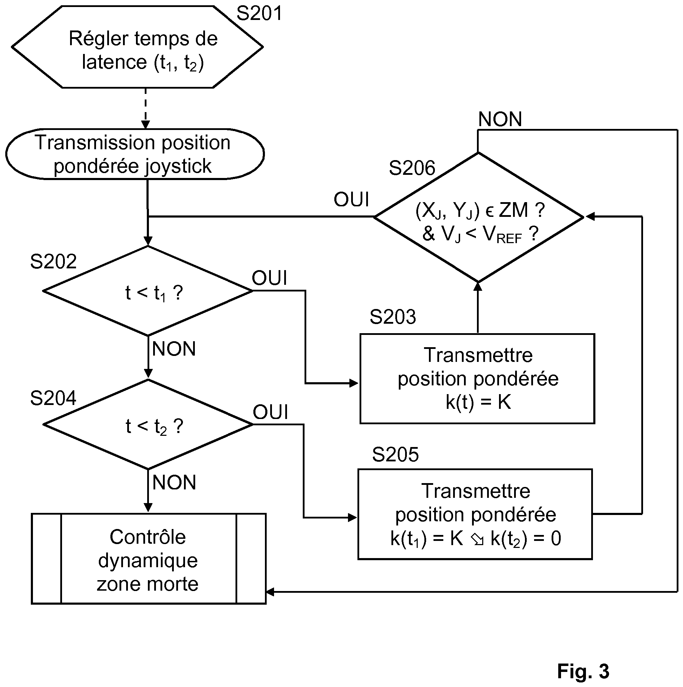

La figure 3 représente une variante du procédé selon le mode de mise en oeuvre représenté à la figure 2. Dans cette variante, le coefficient de sensibilité est défini par une fonction d'amortissement prédéterminée réglable.

Lors d'une étape préliminaire S201, généralement remplie avant que l'utilisateur ne commence à jouer, l'utilisateur doit entrer des temps de latence $t_1$ et $t_2$ qui sont ensuite utilisés pour définir la fonction d'amortissement. Alternativement, des valeurs par défaut pourront être appliquées pour définir ces temps de latence.

Lorsque le procédé de contrôle selon le mode de mise en oeuvre, décrit en lien avec la figure 2, arrive à l'étape S144, le procédé continue, selon la présente variante, à l'étape S202 qui consiste à mesurer si le temps écoulé depuis la détection d'un ralentissement de la vitesse de déplacement sous le seuil de vitesse prédéterminé à l'intérieur de la zone morte est inférieur au premier de temps de latence $t_1$ prédéfini. Si le temps écoulé est inférieur au premier temps de latence, le procédé continue à l'étape S203. Si le temps écoulé est supérieur au premier temps de latence, le procédé continue à l'étape S204.

L'étape S203, c'est-à-dire lorsque le temps écoulé est inférieur au premier temps de latence $t_1$, consiste à transmettre une position pondérée avec un coefficient de sensibilité constant K afin de garder une certaine inertie dans le traitement d'un ralentissement dans le déplacement du joystick. Après cette transmission, le procédé passe à l'étape S206.

L'étape S204, c'est-à-dire lorsque le temps écoulé est supérieur au premier temps de latence $t_1$, consiste à mesurer si le temps écoulé depuis la détection d'un ralentissement de la vitesse de déplacement sous le seuil de vitesse prédéterminé à l'intérieur de la zone morte est inférieur au deuxième temps de latence $t_2$ prédéfini. Si le temps écoulé est inférieur au deuxième temps de latence, le procédé continue à l'étape S205. Si le temps écoulé est supérieur au deuxième temps de latence, le procédé termine la variante de transmission d'une position pondérée et retourne au procédé principal de contrôle dynamique de la zone morte de la figure 2.

L'étape S205, c'est-à-dire lorsque le temps écoulé est inférieur au deuxième temps de latence $t_2$, consiste à transmettre une position pondérée avec un coefficient de sensibilité k(t) décroissant depuis la valeur K au temps $t_1$ jusqu'à la valeur 0 au temps $t_2$ de sorte à amortir le mouvement du joystick dans la zone morte jusqu'à retrouver la situation classique dans laquelle les petits mouvements à l'intérieur de la zone morte ne sont pas transmis. Le coefficient de sensibilité est avantageusement défini au moyen d'une fonction polynomiale conformément à la formule (1). Alternativement, l'étape S205 pourra consister à transmettre des données de position pondérées au moyen d'une fonction d'amortissement k(t) décroissante de préférence depuis la donnée de position pondérée $((X(t_1), Y(t_1)).K$ avec le coefficient de sensibilité constant K au temps $t_1$ jusqu'à la valeur 0 au temps $t_2$. Après cette transmission, le procédé passe à l'étape S206.

L'étape S206 consiste à vérifier que la position actuelle $(X_J, Y_J)$ du joystick est toujours à l'intérieur de la zone et que la vitesse actuelle $(V_J)$ de déplacement du joystick est toujours inférieure au seuil de vitesse $V_{REF}$ prédéterminé. Si les deux conditions sont remplies, à savoir que la position du joystick est située dans la zone morte et que la vitesse de déplacement est inférieure au seuil de vitesse prédéterminé, le procédé retourne à l'étape S202. Sinon, le procédé termine la variante de transmission d'une position pondérée et retourne au procédé principal de contrôle dynamique de la zone morte de la figure 2.

Selon une variante de réalisation avantageuse, lors de l'étape préliminaire S201, l'utilisateur peut entrer des temps de latence $t_1$ et $t_2$ qui sont ensuite utilisés pour définir la fonction d'amortissement, ou alternativement un seul temps de latence ($t_2$). Alternativement, des valeurs par défaut pourront être appliquées pour définir les temps de latence.

Les temps de latence $t_1$ et $t_2$ sont définis de la manière suivante :

$$50\% \, t_2 < t_1 < 80\% \, t_2.$$

De préférence le premier temps de latence $t_1$ est choisi pour correspondre à 2/3 du temps de latence $t_2$.

Selon un exemple de réalisation préféré, le temps de latence $t_{latence}$ est réglable entre des valeurs de 8 millisecondes (ms) et 1200 ms.

Le choix du temps de latence par l'utilisateur sera guidé par son niveau de maitrise du jeu, le type de jeu et le comportement attendu dans le jeu. Ce temps de latence permet de définir le délai de réactivation de la zone morte qui est important pour adoucir la transition entre zone morte inactive et zone morte active.

La figure 4 représente une variante des procédés de contrôle dynamique de la zone morte incluant un contrôle statique de la zone morte avec détermination de la zone morte. On entend par contrôle statique de la zone morte, un réglage qui se base essentiellement sur la position du joystick.

La détermination de la zone morte peut être effectuée préalablement à l'utilisation du joystick pour jouer. Une première étape préliminaire S301 consiste à mesurer l'inclinaison maximale $I_{MAX}$ du joystick. Cette mesure peut être faite par exemple en déplaçant le joystick en butée selon les différents axes de déplacement et à mesurer l'inclinaison maximale par rapport à la position de repos, ou encore par l'intermédiaire d'une saisie par l'utilisateur de l'inclinaison maximale. Cette inclinaison maximale est de préférence définie en degrés.

L'étape S302 consiste à régler la zone morte, lorsque l'inclinaison maximale est connue. De préférence, la zone morte est définie comme la zone autour de la position de repos correspondant à un pourcentage déterminé de l'inclinaison maximale, comprise par exemple entre 0 et 10%, de préférence entre 0 et 5%, et encore plus préférentiellement 2%.

L'étape S303 consiste à détecter la position de repos du joystick. Cette position de repos ($X_0$, $Y_0$) est utilisée pour déterminer la zone morte autour, notamment lors de l'étape S302.

Lors de l'utilisation du joystick, il peut arriver avec le temps que la position de repos se décale par rapport à la zone morte déterminée. L'étape S304 consiste à centrer ou recentrer la zone morte par rapport à la position de repos. Ce centrage de la zone morte est effectué en décalant le point de repos perçu comme position centrale du joystick. L'objectif est de «symétriser» le défaut de recentrage du joystick et par conséquent de pouvoir utiliser une zone morte moins grande. Par exemple, supposons que le joystick se recentre avec un décalage de -2% à +10% selon l'axe horizontal et de -4% à 14% selon l'axe vertical. Une zone morte de 14% au moins est alors nécessaire afin d'éviter tout mouvement indésirable. En décalant de -4% selon l'axe horizontal et de -5% selon l'axe vertical, le joystick se recentre avec un décalage de -6% à +6% selon l'axe horizontal et de -9% à 9% selon l'axe vertical il ne faut plus maintenant que 9% de zone morte.

Une étape supplémentaire S305 est de préférence prévue après l'étape de centrage S304. En effet, le centrage de la zone morte autour du point de repos peut entraîner une asymétrie de la visée de sorte que la vitesse maximale n'est plus la même selon la direction de déplacement du joystick. L'étape S305 consiste à calculer automatiquement la nouvelle vitesse maximale selon chaque direction et effectuer une mise à l'échelle (en faisant varier la sensibilité) dans toutes les directions afin de restaurer la vitesse maximale d'origine et de réobtenir une visée symétrique. Pour cela, l'utilisateur doit entrer les décalages maximaux et minimaux selon l'axe horizontal et vertical et la nouvelle position centrale peut être automatiquement calculée.

Il peut être également prévu une étape supplémentaire S306 consistant à détecter si la position du joystick est toujours située dans la zone morte. Lorsque la position du joystick détectée est en dehors de la zone morte, le procédé passe à l'étape S307.

L'étape S307 consiste à lisser la nouvelle position détectée du joystick par rapport à un historique des positions précédentes ce qui permet de gommer un saut de position lié à la sortie de la zone morte.

Selon une variante de réalisation de la figure 4, la détermination de la zone morte peut être effectuée à travers un réglage par l'utilisateur consistant à entrer une valeur de rayon permettant de définir par projection un disque de zone morte sur le plan du mouvement usuellement sphérique du joystick. La zone morte peut être réglée entre 0 et 90% de la course du joystick correspondant à son déplacement entre sa position de repos et sa position en butée. De préférence la zone morte est définie à 2% de la course du joystick.

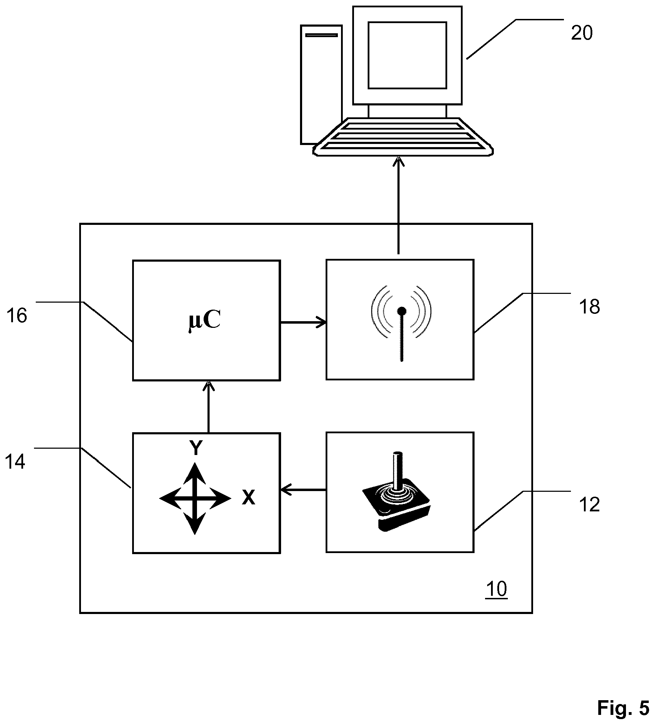

Selon un deuxième aspect, l'invention concerne un dispositif d'actionnement de jeu. La figure 5 représente schématiquement un joystick 10 selon un mode de réalisation de l'invention.

Le joystick comprend un levier 12 agencé pour occuper une position de repos et se déplacer selon deux axes X-Y et présentant une zone morte définie autour de la position de repos. Un capteur de position 14 est agencé pour détecter la position du levier 12 suivant les deux axes X-Y. Des moyens de traitement, comme par exemple un microcontrôleur 16, sont agencés pour déterminer la vitesse de déplacement du levier basée sur les positions successives détectées et pour comparer la vitesse de déplacement avec un seuil de vitesse prédéterminé. Des moyens de communication 18 sont agencés pour transmettre des données de position et de vitesse à un unité de traitement externe, comme par exemple un ordinateur personnel 20.

Plus particulièrement, le microcontrôleur est agencé pour fournir aux moyens de communication des données de position correspondant aux positions détectées hors de la zone morte et une valeur prédéfinie pour les positions détectées dans la zone morte, lorsque la vitesse de déplacement du levier est inférieure au seuil de vitesse prédéterminé, et des données de position correspondant à toutes les positions détectées, y compris celles détectées dans la zone morte, lorsque la vitesse de déplacement du levier est supérieure au seuil de vitesse prédéterminé. Les moyens de communication sont en outre agencés pour transmettre des données de position correspondant à une position détectée dans la zone morte, pondérées par un coefficient de sensibilité prédéterminé, lorsque la vitesse de déplacement de l'élément de commande décroit et devient inférieure au seuil de vitesse prédéterminé.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

**Revendications**

1. Procédé de contrôle d'un curseur de visée sur un écran au moyen d'un dispositif d'actionnement de jeu (10) équipé d'au moins un élément de commande de direction (12) agencé pour occuper une position de repos ($X_0$, $Y_0$) et se déplacer au moins selon un axe (X, Y), et présentant une zone morte (ZM) définie par un déplacement prédéterminé de l'élément de commande de direction le long dudit au moins un axe de part et d'autre de la position de repos, comprenant les étapes suivantes :

   - détecter une position ($X_J$, $Y_J$) de l'élément de commande de direction le long dudit au moins un axe,
   - déterminer la vitesse ($V_J$) de déplacement de l'élément de commande de direction basée sur un historique des positions détectées,
   - comparer la vitesse de déplacement de l'élément de commande de direction avec un seuil de vitesse ($V_{REF}$) prédéterminé,
   - lorsque la vitesse de déplacement de l'élément de commande est inférieure au seuil de vitesse prédéterminé, transmettre des données de position correspondant à la position détectée hors de la zone morte et transmettre une valeur prédéfinie ($X_0$, $Y_0$) dans la zone morte, et
   - lorsque la vitesse de déplacement de l'élément de commande est supérieure au seuil de vitesse prédéterminé, transmettre des données de position correspondant à la position détectée, y compris dans la zone morte,

   et **caractérisé en ce qu'**il comprend en outre l'étape consistant à :

   - transmettre des données de position correspondant à une position détectée dans la zone morte, pondérées par un coefficient (K ; k(t)) de sensibilité prédéterminé, lorsque la vitesse de déplacement de l'élément de commande décroit et devient inférieure au seuil de vitesse prédéterminé.

2. Procédé de contrôle d'un curseur de visée selon la revendication 1, dans lequel ledit au moins un élément de commande de direction est agencé pour se déplacer selon au moins deux axes formant un plan, la zone morte étant définie par un déplacement prédéterminé dans le plan autour de la zone de repos.

3. Procédé de contrôle d'un curseur de visée selon la revendication 1 ou 2, dans lequel, lorsque l'élément de commande de direction reste dans la zone morte, le coefficient de sensibilité décroit jusqu'à devenir nul suivant une fonction d'amortissement prédéterminée réglable.

4. Procédé de contrôle d'un curseur de visée selon la revendication 3, dans lequel la fonction d'amortissement est définie de la manière suivante :

   - durant un premier temps de latence, le coefficient de sensibilité (K) est constant ;
   - durant un deuxième temps de latence, le coefficient de sensibilité (k(t)) décroit jusqu'à atteindre zéro à la fin du deuxième temps de latence.

**5.** Procédé de contrôle d'un curseur de visée selon l'une des revendications 1 à 4, comprenant en outre une étape consistant à :

- lisser la nouvelle position détectée du joystick par rapport à un historique des positions précédentes, lors d'un déplacement depuis une position située dans la zone morte vers une position située hors de la zone morte afin de gommer un saut de position lié à la sortie de la zone morte.

**6.** Procédé de contrôle d'un curseur de visée selon la revendication 5, comprenant en outre les étapes consistant à :

- détecter la position de repos de l'élément de commande de direction le long dudit au moins un axe ;
- définir la zone morte autour de la position de repos détectée de sorte que cette dernière soit située au centre de la zone morte.

**7.** Procédé de contrôle d'un curseur de visée selon la revendication 6, dans lequel l'élément de commande de direction présente une vitesse maximale ($V_{MAX}$) d'origine pour se déplacer le long dudit au moins un axe, le procédé comprenant en outre une étape consistant à :

- calculer automatiquement la vitesse maximale selon chaque direction le long dudit au moins un axe ;
- effectuer une mise à l'échelle selon chaque direction le long de l'axe en faisant varier le coefficient de sensibilité afin de restaurer la vitesse maximale d'origine et d'obtenir une visée symétrique.

**8.** Procédé de contrôle d'un curseur de visée selon l'une des revendications précédentes, dans lequel l'élément de commande de direction présente, lors d'un déplacement en butée le long dudit au moins un axe, une inclinaison maximale ($I_{MAx}$) par rapport à la position de repos, le procédé comprenant en outre une étape consistant à :

- régler un pourcentage de l'inclinaison maximale pour définir la zone morte autour de la position de repos.

**9.** Procédé de contrôle d'un curseur de visée selon l'une des revendications 1 à 7, comprenant en outre les étapes consistant à :

- entrer une valeur de rayon permettant de définir un disque par projection sur le plan du mouvement sphérique de l'élément de commande de direction et
- utiliser le disque par projection défini pour déterminer la zone morte.

**10.** Dispositif d'actionnement de jeu (10) comprenant :

- au moins un élément de commande de direction (12) agencé pour occuper une position de repos ($X_0$, $Y_0$) et se déplacer au moins selon un axe (X, Y) et présentant une zone morte (ZM) définie par un déplacement prédéterminé le long de l'axe de part et d'autre de la position de repos ;
- un capteur de position (14) agencé pour détecter une position ($X_J$, $Y_J$) de l'élément de commande de direction le long dudit au moins un axe ;
- des moyens de traitement (16) agencés pour déterminer la vitesse ($V_J$) de déplacement de l'élément de commande de direction basée sur les positions successives détectées et pour comparer la vitesse de déplacement de l'élément de commande de direction avec un seuil de vitesse ($V_{REF}$) prédéterminé ;
- des moyens de communication (18) agencés pour transmettre

o lorsque la vitesse de déplacement de l'élément de commande est inférieure au seuil de vitesse prédéterminé, des données de position correspondant à la position détectée hors de la zone morte et une valeur prédéfinie dans la zone morte, et
o lorsque la vitesse de déplacement de l'élément de commande est supérieure au seuil de vitesse prédéterminé, des données de position correspondant à la position détectée, y compris dans la zone morte

**caractérisé en ce que** les moyens de communication sont en outre agencés pour transmettre des données de position correspondant à une position détectée dans la zone morte, pondérées par un coefficient de sensibilité prédéterminé, lorsque la vitesse de déplacement de l'élément de commande décroit et devient inférieure au seuil de vitesse prédéterminé.

**EP 3 040 107 B1**

**Patentansprüche**

1. Verfahren zur Steuerung eines Zielcursors auf einem Bildschirm mittels einer Spielbetätigungsvorrichtung (10), die mit mindestens einem Richtungssteuerungselement (12) ausgestattet ist, das ausgebildet ist, um eine Ruhestellung $(X_0, Y_0)$ einzunehmen und sich mindestens gemäß einer Achse (X, Y) zu verlagern, und einen toten Bereich (ZM) aufweist, der von einer vorbestimmten Verlagerung des Richtungssteuerungselements entlang der mindestens einen Achse beiderseits der Ruhestellung definiert ist, umfassend die folgenden Schritte:

   - Ermitteln einer Position $(X_J, Y_J)$ des Richtungssteuerungselements entlang der mindestens einen Achse,
   - Bestimmen der Verlagerungsgeschwindigkeit $(V_J)$ des Richtungssteuerungselements auf der Basis eines Verlaufs der ermittelten Positionen,
   - Vergleichen der Verlagerungsgeschwindigkeit des Richtungssteuerungselements mit einem vorbestimmten Geschwindigkeitsgrenzwert $(V_{REF})$,
   - wenn die Verlagerungsgeschwindigkeit des Steuerungselements kleiner als der vorbestimmte Geschwindigkeitsgrenzwert ist, Übertragen der Positionsdaten, die der außerhalb des toten Bereichs ermittelten Position entsprechen, und Übertragen eines vorbestimmten Wertes $(X_0, Y_0)$ im toten Bereich, und
   - wenn die Verlagerungsgeschwindigkeit des Steuerungselements größer als der vorbestimmte Geschwindigkeitsgrenzwert ist, Übertragen der Positionsdaten, die der ermittelten Position entsprechen, inklusive im toten Bereich,

   und **dadurch gekennzeichnet, dass** es ferner einen Schritt umfasst, der darin besteht:

   - Übertragen der mit einem vorbestimmten Sensibilitätskoeffizienten (K; k(t)) gewichteten Positionsdaten, die einer im toten Bereich ermittelten Position entsprechen, wenn die Verlagerungsgeschwindigkeit des Steuerungselements abnimmt und kleiner als der vorbestimmte Geschwindigkeitsgrenzwert wird.

2. Steuerungsverfahren eines Zielcursors nach Anspruch 1, wobei das mindestens eine Richtungssteuerungselement ausgebildet ist, um sich gemäß von mindestens zwei Achsen zu verlagern, die eine Ebene bilden, wobei der tote Bereich durch eine vorbestimmte Verlagerung in der Ebene um die Ruhezone definiert ist.

3. Steuerungsverfahren eines Zielcursors nach Anspruch 1 oder 2, wobei, wenn das Richtungssteuerungselement im toten Bereich bleibt, der Sensibilitätskoeffizient gemäß einer vorbestimmten einstellbaren Dämpfungsfunktion abnimmt, bis er Null wird.

4. Steuerungsverfahren eines Zielcursors nach Anspruch 3, wobei die Dämpfungsfunktion folgendermaßen definiert ist:

   - während einer ersten Latenzzeit ist der Sensibilitätskoeffizient (K) konstant;
   - während einer zweiten Latenzzeit nimmt der Sensibilitätskoeffizient (k(t)) ab, bis er am Ende der zweiten Latenzzeit Null erreicht.

5. Steuerungsverfahren eines Zielcursors nach einem der Ansprüche 1 bis 4, umfassend ferner einen Schritt, der darin besteht:

   - Glätten der neuen ermittelten Position des Joysticks in Bezug zu einem Verlauf der vorangegangenen Positionen bei einer Verlagerung von einer Position im toten Bereich in eine Position außerhalb des toten Bereichs, um einen Positionssprung zu radieren, der mit dem Verlassen des toten Bereichs verbunden ist.

6. Steuerungsverfahren eines Zielcursors nach Anspruch 5, umfassend ferner die Schritte, die darin bestehen:

   - Ermitteln der Ruhestellung des Richtungssteuerungselements entlang der mindestens einen Achse;
   - Definieren des toten Bereichs um die ermittelte Ruhestellung derart, dass sich diese im Zentrum des toten Bereichs befindet.

7. Steuerungsverfahren eines Zielcursors nach Anspruch 6, wobei das Richtungssteuerungselement eine maximale Ursprungsgeschwindigkeit $(V_{MAX})$ aufweist, um sich entlang der mindestens einen Achse zu verlagern, wobei das Verfahren ferner einen Schritt aufweist, der darin besteht:

   - automatisches Berechnen der maximalen Geschwindigkeit gemäß jeder Richtung entlang der mindestens einen Achse;

- Durchführen einer Maßstabsänderung gemäß jeder Richtung entlang der Achse durch Ändern des Sensibilitätskoeffizienten, um die maximale Ursprungsgeschwindigkeit wiederherzustellen und ein symmetrisches Zielen zu erhalten.

**8.** Steuerungsverfahren eines Zielcursors nach einem der vorangehenden Ansprüche, wobei das Richtungssteuerungselement bei einer Verlagerung zum Anschlag entlang der mindestens einen Achse eine maximale Neigung (IMAX) in Bezug zur Ruhestellung aufweist, wobei das Verfahren ferner einen Schritt aufweist, der darin besteht:

- Einstellen eines Prozentsatzes der maximalen Neigung, um den toten Bereich um die Ruhestellung herum zu definieren.

**9.** Steuerungsverfahren eines Zielcursors nach einem der Ansprüche 1 bis 7, umfassend ferner die Schritte, die darin bestehen:

- Eingeben eines Radiuswertes, der erlaubt, eine Scheibe durch Projektion auf die Ebene der kugeligen Bewegung des Richtungssteuerungselements zu definieren und
- Verwenden der definierten Projektionsscheibe, um den toten Bereich zu bestimmen.

**10.** Spielbetätigungsvorrichtung (10), umfassend:

- mindestens ein Richtungssteuerungselement (12), das ausgebildet ist, um eine Ruhestellung ($X_0$, $Y_0$) einzunehmen und um sich mindestens gemäß einer Achse (X, Y) zu verlagern, und einen toten Bereich (ZM) aufweist, der von einer vorbestimmten Verlagerung entlang der Achse beiderseits der Ruhestellung definiert ist;
- einen Positionssensor (14), der ausgebildet ist, um eine Position ($X_J$, $Y_J$) des Richtungssteuerungselements entlang der mindestens einen Achse zu ermitteln;
- Verarbeitungsmittel (16), die ausgebildet sind, um die Verlagerungsgeschwindigkeit ($V_J$) des Richtungssteuerungselements auf der Basis der aufeinanderfolgend ermittelten Positionen zu ermitteln und um die Verlagerungsgeschwindigkeit des Richtungssteuerungselements mit einem vorbestimmten Geschwindigkeitsgrenzwert ($V_{REF}$) zu vergleichen;
- Kommunikationsmittel (18), die ausgebildet sind, um zu übertragen

   ○ wenn die Verlagerungsgeschwindigkeit des Steuerungselements kleiner als der vorbestimmte Geschwindigkeitsgrenzwert ist, Positionsdaten, die der außerhalb des toten Bereichs ermittelten Position entsprechen, und eines vorbestimmten Wertes ($X_0$, $Y_0$) im toten Bereich, und
   ○ wenn die Verlagerungsgeschwindigkeit des Steuerungselements größer als der vorbestimmte Geschwindigkeitsgrenzwert ist, Positionsdaten, die der ermittelten Position entsprechen, inklusive im toten Bereich,

**dadurch gekennzeichnet, dass** die Kommunikationsmittel ferner ausgebildet sind, um durch einen vorbestimmten Sensibilitätskoeffizienten gewichtete Positionsdaten zu übertragen, die einer im toten Bereich ermittelten Position entsprechen, wenn die Verlagerungsgeschwindigkeit des Steuerungselements abnimmt und kleiner als der vorbestimmte Geschwindigkeitsgrenzwert wird.

## Claims

**1.** A method for controlling a sight extension on a screen by means of a joystick (10) equipped with at least one direction control element (12) laid out for occupying a rest position ($X_0$, $Y_0$) and for moving at least along an axis (X, Y), and having a dead area (ZM) defined by a predetermined displacement of the direction control element along said at least one axis on either side of the rest position, comprising the following steps:

- detecting a position ($X_J$, $Y_J$) of the direction control element along said at least one axis,
- determining the displacement velocity ($V_J$) of the direction control element based on a history of the detected positions,
- comparing the displacement velocity of the direction control element with a predetermined threshold velocity ($V_{REF}$),
- when the displacement velocity of a control element is less than the first predetermined threshold velocity, transmitting position data corresponding to the detected position outside the dead area and transmitting a

predefined value ($X_0$, $Y_0$) in the dead area, and
- when the displacement velocity of the control element is greater than the predetermined threshold velocity, transmitting position data corresponding to the detected position including in the dead area,

and **characterized in that** it further comprises the step consisting of:

- transmitting position data corresponding to a detected position in the dead area, weighted by a predetermined sensitivity coefficient (K; k(t)), when the displacement velocity of the control element decreases and becomes less than the predetermined velocity threshold.

2. The method for controlling a sight extension according to claim 1, wherein said at least one direction control element is laid out for moving along at least two axes forming a plane, the dead area being defined by a predetermined displacement in the plane around the rest position.

3. The method for controlling a sight extension according to claim 1 or 2, wherein, when the direction control element remains in the dead area, the sensitivity coefficient decreases down to zero according to an adjustable predetermined damping function.

4. The method for controlling a sight extension according to claim 3, wherein the damping function is defined in the following way:

during a first latency period, the sensitivity coefficient (K) is constant;
during a second latency time, the sensitivity coefficient (k(t)) decreases until it attains zero at the end of the second latency time.

5. The method for controlling a sight extension according to one of claims 1 to 4, further comprising a step consisting of:

- smoothing the new detected position of the joystick relatively to a history of the preceding positions, during a displacement from a position located in the dead area towards a position located outside the dead area, in order to erase a position jump related to the exit of the dead area.

6. The method for controlling a sight extension according to claim 5, further comprising the steps consisting of:

- detecting the rest position of the direction control element along said at least one axis;
- defining the dead area around the detected rest position so that the latter is located at the centre of the dead area.

7. The method for controlling a sight extension according to claim 6, wherein the direction control element has a maximum initial velocity ($V_{MAX}$) for moving along said at least one axis, the method further comprising a step consisting of:

- automatically calculating the maximum velocity along each direction along said at least one axis;
- carrying out a scaling up along each direction along the axis by varying the sensitivity coefficient in order to restore the initial maximum velocity and to obtain a symmetrical sight.

8. The method for controlling a sight extension according to one of the preceding claims, wherein the direction control element has, during an abutment displacement along said at least one axis, a maximum tilt ($I_{MAX}$) relatively to the rest position, the method further comprising a step consisting of:

adjusting a percentage of the maximum tilt in order to define the dead area around the rest position.

9. The method for controlling a sight extension according to one of claims 1 to 7, further comprising the steps consisting of:

- inputting a radius value giving the possibility of defining a disc by projection on the spherical movement plane of the direction control element and
- using the disc by projection defined for determining the dead area.

10. The game actuation device (10) comprising:

13

- at least one direction control element (12) laid out for occupying a rest position $(X_0, Y_0)$ and for displacement along at least one axis $(X, Y)$ and having a dead area (ZM) defined by a predetermined displacement along the axis on either side of the rest position;
- a position sensor (14) laid out for detecting a position $(X_J, Y_J)$ of the direction control element along said at least one axis;
- processing means (16) laid out for determining the displacement velocity $(V_J)$ of the direction control element based on the successive detected positions and for comparing the displacement velocity of the direction control element with a predetermined velocity threshold $(V_{REF})$ ;
- communication means (18) laid out for transmitting

  ○ when the displacement velocity of the control element is less than the predetermined velocity threshold, position data corresponding to the detected position outside the dead area and a predefined value in the dead area, and
  ○ when the displacement velocity of the control element is greater than the predetermined velocity threshold, position data corresponding to the detected position, including in the dead area.

**characterized in that** the communication means are further laid out for transmitting position data corresponding to a position detected in the dead area, weighted by a predetermined sensitivity coefficient, when the displacement velocity of the control element decreases and becomes less than the predetermined velocity threshold.

```
        ╭─────────────────────────╮
        │   Contrôle dynamique     │
        │      zone morte          │
        ╰─────────────────────────╯
                     │
                     ▼
        ┌──┬─────────────────┬──┐
  S1    │  │   Déterminer    │  │
        │  │   zone morte    │  │
        │  │     (ZM)        │  │
        └──┴─────────────────┴──┘
                     │
                     ▼
        ┌────────────────────────┐
  S2    │     Détecter           │
        │  position joystick     │◄──────┐
        │     (XJ, YJ)           │       │
        └────────────────────────┘       │
                     │                    │
                     ▼                    │
        ┌────────────────────────┐       │
  S3    │    Déterminer          │       │
        │  vitesse joystick      │       │
        │      (VJ)              │       │
        └────────────────────────┘       │
                     │                    │
              S4     ▼                    │
   NON        ◇───────────────◇          │
   ◄──────────   VJ>VREF ?    │          │
              ◇───────────────◇          │
                     │  OUI               │
   S42               ▼                    │
   ◇───────────◇           S41           │
     (XJ, YJ) ∈ ZM ?   NON  ┌────────────┴──┐
   ◇───────────◇──────────► │  Transmettre   │
         │ OUI              │ position joystick│──┘
   S45   ▼                  │    (XJ, YJ)    │
  ┌──────────────┐          └───────────────┘
  │ Transmettre  │
  │ valeur prédéfinie│
  │   (X0, Y0)   │
  └──────────────┘
```

S1 Déterminer zone morte (ZM)

S2 Détecter position joystick $(X_J, Y_J)$

S3 Déterminer vitesse joystick $(V_J)$

S4 $V_J > V_{REF}$ ?  NON / OUI

S42 $(X_J, Y_J) \in ZM$ ?  NON / OUI

S41 Transmettre position joystick $(X_J, Y_J)$

S45 Transmettre valeur prédéfinie $(X_0, Y_0)$

**Fig. 1**

Fig. 2

S201

Régler temps de
latence $(t_1, t_2)$

Transmission position
pondérée joystick

NON

S206

$(X_J, Y_J) \in$ ZM ?
& $V_J < V_{REF}$ ?

OUI

S202

$t < t_1$ ?

OUI

NON

S204

$t < t_2$ ?

OUI

NON

S203

Transmettre
position pondérée
$k(t) = K$

S205

Transmettre
position pondérée
$k(t_1) = K \searrow k(t_2) = 0$

Contrôle
dynamique
zone morte

**Fig. 3**

```
      ┌─────────────────────┐              ┌──────────────────────┐
      │    Détermination    │              │   Contrôle statique  │
      │     zone morte      │              │      zone morte      │
      └─────────────────────┘              └──────────────────────┘
                 │                                     │
                 ▼                                     ▼
  S301  ┌───────────────────┐          ┌──────────────────────┐  S303
        │ Mesurer inclinaison│          │      Détecter        │
        │  maximale (I_MAX)  │          │   position repos     │
        └───────────────────┘          │     (X_0, Y_0)       │
                 ┊                      └──────────────────────┘
  S302           ┊                                 │
        ┌───────────────────┐                      ▼
        │      Régler       │          ┌──────────────────────┐  S304
        │    zone morte     │ ───────▶ │      Centrer         │
        │     (%I_MAX)      │ ◀─────── │     zone morte       │
        └───────────────────┘          └──────────────────────┘
                                                   │
                                                   ▼
                                       ┌──────────────────────┐  S305
                                       │   Mettre à l'échelle │
                                       │      V_MAX(X, Y)     │
                                       └──────────────────────┘
                                                   │
                                                   ▼
                    NON                  ◇ (X_J, Y_J) ∈ ZM ? ◇   S306
        ┌───────────────────┐  ◀─────────
        │  Lisser position  │  S307              OUI
        │      joystick     │
        └───────────────────┘
```

Mesurer inclinaison maximale ($I_{MAX}$)

Régler zone morte (%$I_{MAX}$)

Détecter position repos ($X_0$, $Y_0$)

Centrer zone morte

Mettre à l'échelle $V_{MAX}(X, Y)$

$(X_J, Y_J) \in ZM$ ?

Lisser position joystick

**Fig. 4**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2010137079 A
- JP H08281584 B